# EUROPEAN PATENT SPECIFICATION

(11) **EP 1 175 141 B1**
(45) Date of publication and mention of the grant of the patent: **25.06.2003**
(21) Application number: 00908109.2
(22) Date of filing: 01.03.2000
(51) Int. Cl.: A01G 9/12

(54) **HOLDER FOR PLANT CUTTINGS**
HALTER FÜR PFLANZENSTECKLINGE
SUPPORT DE BOUTURES

(30) Priority: 09.03.1999 NL 1011492
(43) Date of publication of application: 30.01.2002
(73) Proprietor: Visser 's-Gravendeel Holding B.V., NL-3295 XB 's-Gravendeel (NL)
(72) Inventor: VAN TOL, Hendricus, Wouterus, Jozef, NL-2461 SN Ter Aar (NL); DEKKER, Cornelis, Wilhelmus, NL-1711 RK Hensbroek (NL); VISSER, Cornelis, Frans, Taco, NL-3295 LJ 's-Gravendeel (NL)
(74) Representative: Eveleens Maarse, Pieter
(86) International application number: NL0000126
(87) International publication number: WO00052996

(56) References cited:
- DATABASE WPI Section Ch, Week 199805 Derwent Publications Ltd., London, GB; Class A97, AN 1998-045539 XP002121473 & JP 09 294465 A (HOWA KOGYO KK), 18 November 1997 (1997-11-18)

## Description

The present invention relates to a holder for plant cuttings.

Cutting is a method of vegetative reproduction of plants for the purpose of obtaining genetically identical culture material.

Plant parts are herein cut from existing plants and after a treatment cultivated to fully-grown plants. The severed plant cuttings must herein be subjected to a precise temperature and humidity treatment to acquire sufficient roots to enable growth into adult plants.

In the prior art the severed plant cuttings are placed in culture material, for instance soil, sand or substrate, whereafter the thus prepared plant cuttings are subjected to a temperature and humidity treatment.

This procedure has the drawback that the plant cuttings placed in culture material take up much space.

Another problem lies in transport of the plant cuttings; plant cuttings are usually taken in countries with a warm climate, whereafter they are transported to countries with a temperate climate where the plants are grown. There is therefore a need for holders for the plant cuttings in which they can be easily transported while taking up the least amount of space, for instance as air freight.

To this end the present invention provides a holder for plant cuttings, comprising at least one carrier and a series of clamping elements which are fixed to the carrier and which are each adapted to clamp a plant cutting, wherein the clamping elements are fixed to the carrier such that plant cuttings clamped in the clamping elements extend substantially parallel to each other and the centre of each of the clamping elements is situated substantially in the same central plane.

As a consequence of these measures it is possible to transport plant cuttings on a relatively small surface area and to subject them to an initial treatment, for instance in a climate chamber.

A final advantage is that the holder enables mechanical processing, for instance striking, of the plant cuttings. The supply of the plant cuttings in individualized form and with defined position is of the greatest importance herefor; these measures first make it possible for a machine to take hold of the cuttings one by one and - after a possible treatment - to place them in a culture pot. A culture pot is generally provided for this purpose with a hole. This application is particularly important in the case of chrysanthemums.

According to a first important embodiment the central plane extends at a right angle to the plant cuttings. This provides the option of transporting the plant cuttings on the smallest possible surface area. According to yet another embodiment the carrier is substantially flexible.

This provides the option of rolling up the carrier.

Another embodiment teaches that the carrier is divided into substantially rigid pieces which are coupled in mutually flexible manner. This provides the option of folding the rigid pieces zigzag-wise against each other. Both these embodiments have the advantage of further reducing the space taken up by the filled holder.

According to yet another preferred embodiment the clamping means each comprise at least two parts, at least one of which is connected resiliently to the carrier.

This measure is important in respect of the fact that the plant cuttings vary considerably in thickness. The resilience of both elements provides the possibility of good clamping of plant cuttings of greatly varying thickness without them being damaged.

Other attractive preferred embodiments are stated in the remaining sub-claims.

The invention will be elucidated hereinbelow with reference to the annexed figures, in which:
figure 1 shows a part of a holder according to the present invention in which two clamping elements are depicted fixed to a carrier;
figure 2 shows a view corresponding with figure 1 of a situation wherein two adjacent carriers are placed against each other;
figure 3 is a partly broken-away perspective view of a second embodiment, wherein the carriers are accommodated in a spatial construction;
figure 4 shows a cross-section along arrow IV in figure 3;
figure 5 is a top view of a rolled-up carrier as according to a third embodiment of the present invention;
figure 6 shows a view of a fourth embodiment;
figure 7 is a perspective view of a fifth embodiment of the present invention;
figure 8 is a perspective view of a sixth embodiment of the present invention; and
figure 9 is a perspective view of a seventh embodiment of the present invention.

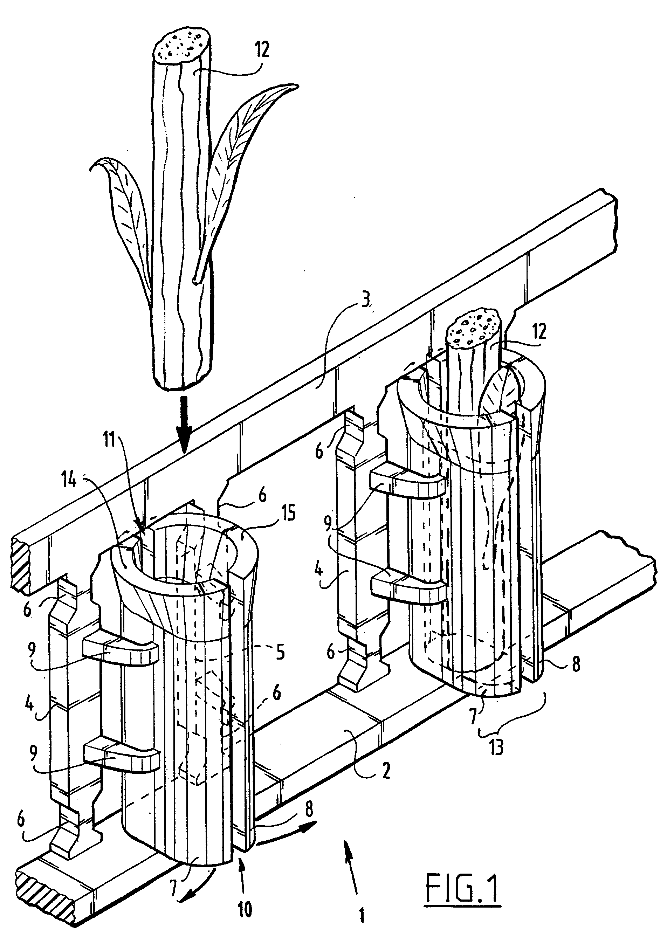

Figure 1 shows a part of a holder 1 which is formed by a lower material strip 2 and an upper material strip 3 extending parallel thereto. Both material strips 2,3 are preferably manufactured from plastic. At the position of a clamping element both strips 2,3 are mutually connected by two elements 4 respectively 5 extending perpendicularly of the length direction of material strips 2,3. Both elements 4,5 are provided with a narrowed portion 6 close to their attachment to the two strips 2,3.

The thus described structure is repeated with regular spacing in lengthwise direction of strips 2,3. The clamping elements are formed by two substantially semi-cylindrical elements 7 which are each fixed by means of two bridges 9 to the bridge elements 4 respectively 5. Both semi-cylindrical elements 7,8 are mutually separated on either side by a gap 10 respectively 11. The narrowed portions 6 of bridge elements 4 respectively 5 make it possible that when semi-cylindrical elements 7,8 are moved apart a force directing them towards each other is created. This is however also a question of dimensioning, and this force also depends on the chosen type of material, particularly the properties of the relevant plastic.

Insertion of plant cuttings 12 is facilitated by an upward diverging part 14 respectively 15 arranged on the top part of each of semi-cylindrical elements 7,8. This creates a kind of funnel. Strip 2 extends to some extent under the space between semi-cylindrical elements 7,8 so that a plant cutting 12 is prevented from falling out through the bottom.

The inner side of semi-cylindrical elements 7,8 can be formed quite at random; it is possible to embody it as a circular cylinder, although it is also possible to give it a slightly oval form.

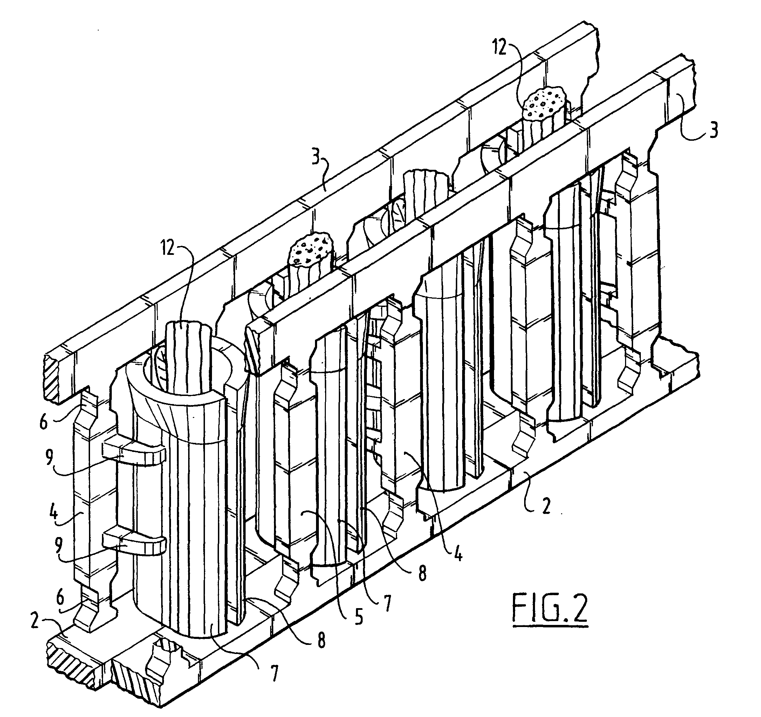

Figure 2 shows how two such holders 1 are placed against each other, wherein the clamping elements 13 formed by the two semi-cylindrical elements 7,8 and forming part of different holders 1 are placed between each other. This provides the option of transporting or storing the cuttings in an exceptionally space-saving manner.

Of importance here is that the distance between holders 1 is determined by the width of the lower strip 2. Also important here is the fact that the size of clamping elements 13 in lengthwise direction of holders 1 is less than half the pitch of the clamping elements, so that sufficient space remains to place the clamping elements between each other. In the present case the funnel-like parts 14 and 15 are so wide that they extend partially under the lower strips 2 of both holders. It is however important herein that the opening at the top between the two upper parts 14,15 remains clear.

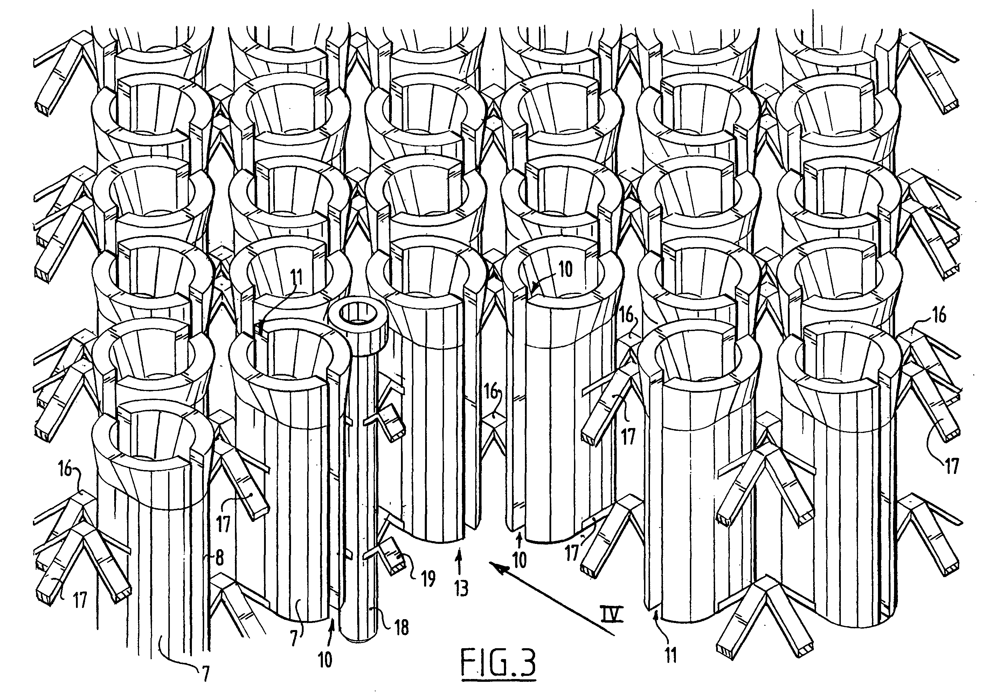

Figure 3 further shows an embodiment wherein the clamping elements are not fixed to a holder extending in the form of a strip, but wherein the separate clamping elements are combined to form a spatial structure and in top view the clamping elements extend in a two-dimensional structure. This provides the option of increasing still further the density of the plant cuttings, although on the other hand the plant cuttings are less readily accessible.

This embodiment comprises a large number of clamping elements 13. The direction of the gaps 10,11 of clamping elements 13 are rotated in turn through an angle of 90° so that a chessboard structure is obtained. This measure is related to the degree of freedom between adjacent clamping elements. The two semi-cylindrical elements 7,8 forming part of a clamping element 13 must after all be able to move relative to each other.

The clamping elements are therefore mutually connected by connecting strips which permit a lateral movement of the clamping elements. These connections are formed by plates 16 which are manufactured from the same material as the clamping elements and which are each connected by means of connecting rods 17 to the four adjacent clamping elements. Each plate 16 is therefore connected to the adjacent clamping elements by four rods 17. Each clamping element is connected on each of its sides to each of two plates lying one above the other by means of two rods located one above the other. A cohesive spatial structure is thus obtained wherein the semi-cylindrical elements 7,8 forming part of a clamping element can move so as to acquire the required freedom of movement.

Arranged at regular distances in this structure are columns 18 which are connected to the adjacent elements by means of V-shaped rods 19. These columns 18 provide the option of placing a whole assembly of such clamping elements on a flat surface and, when rod 18 is long enough, the option of placing different such structures above one another, even in the situation filled with plant cuttings.

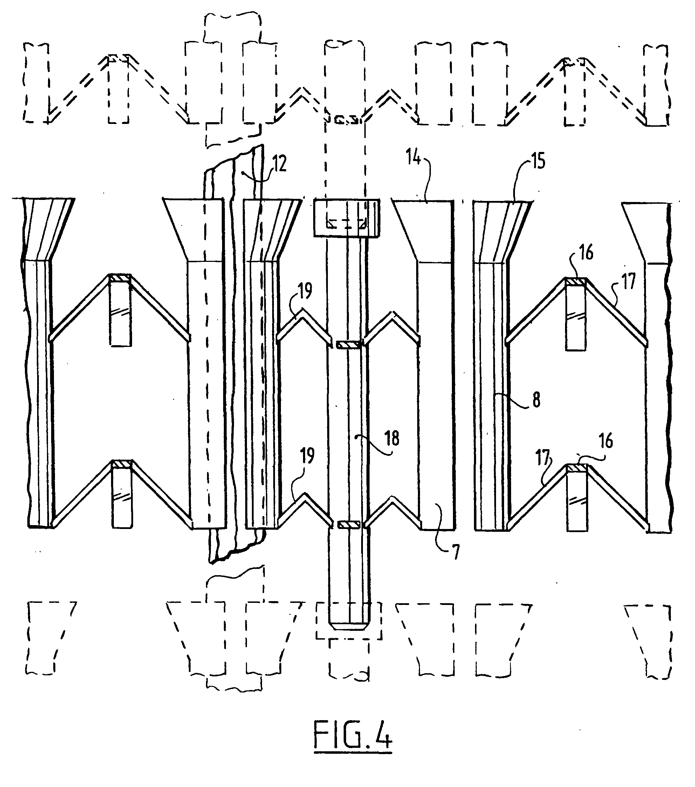

Figure 4 shows a cross-section of such a configuration.

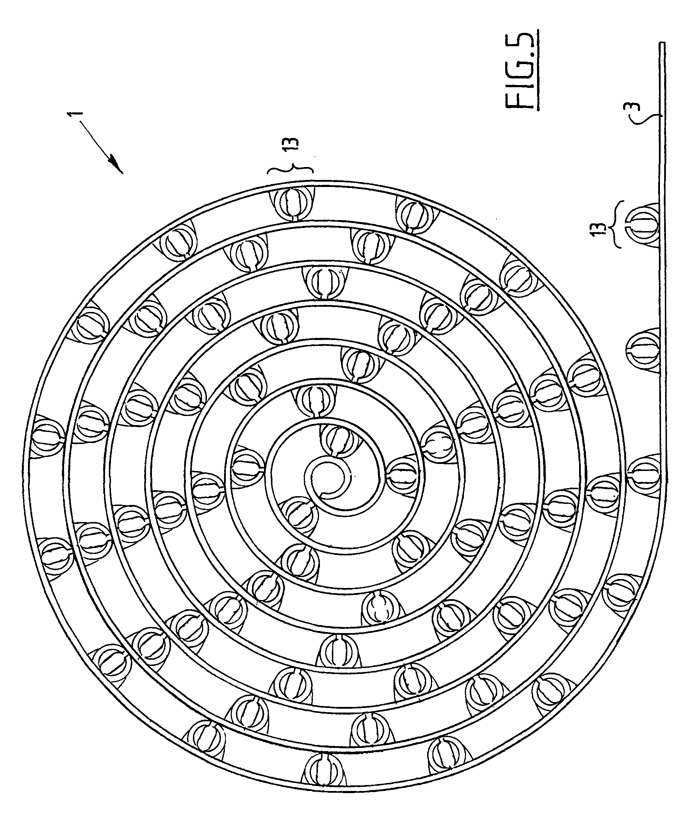

The fourth embodiment shown in figure 5 represents as it were a top view of the embodiment shown in figure 1, wherein the choice of the material is such that strips 2,3 of figure 1 are to some extent flexible and can thus be rolled up.

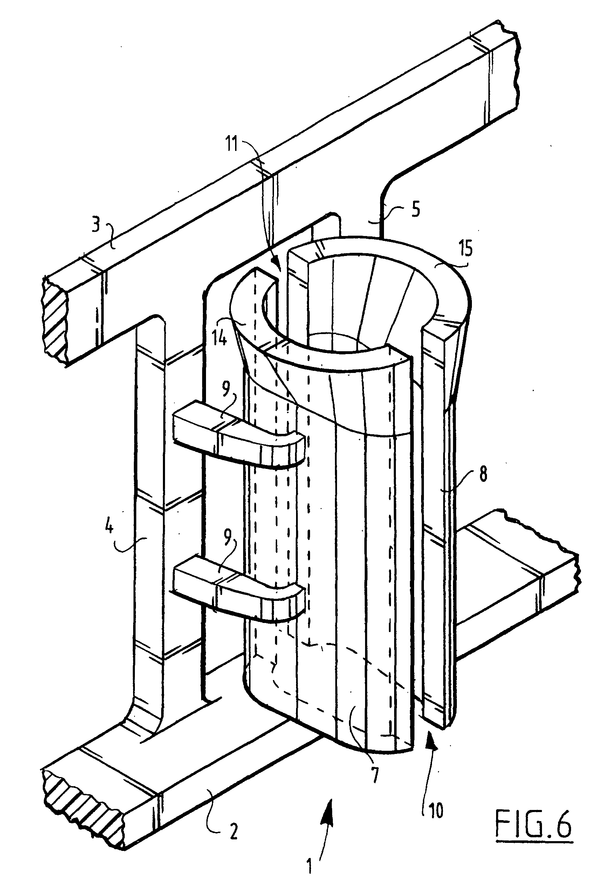

Figure 6 shows a view also corresponding with figure 1 of a fifth embodiment, wherein the narrowed portions 6 are omitted. It is assumed herein that the material from which the construction is made has the same relevant resilient properties, although it is quite possible to dimension the bridges 9 as such.

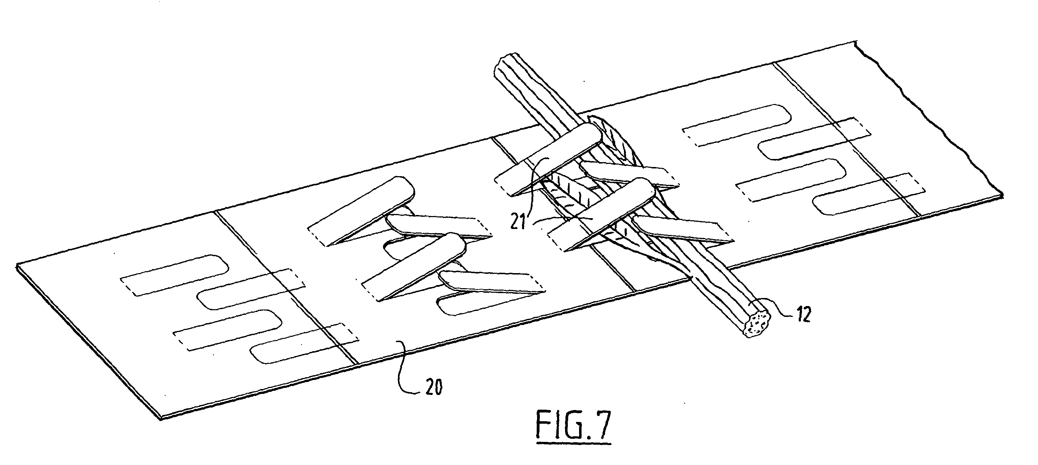

Finally, figure 7 shows a greatly differing embodiment which can be manufactured from for instance paper.

It will be apparent that this can also be manufactured from plastic instead of paper, provided there is sufficient stiffness in the material. In this embodiment the carrier is formed by a strip of paper into which lips 20 are recessed by means of for instance punching. The choice of material is herein such that lips 20 are urged with a certain force back to their original position. It is then possible to slide a plant cutting 12 from one side between the lips and the actual carrier.

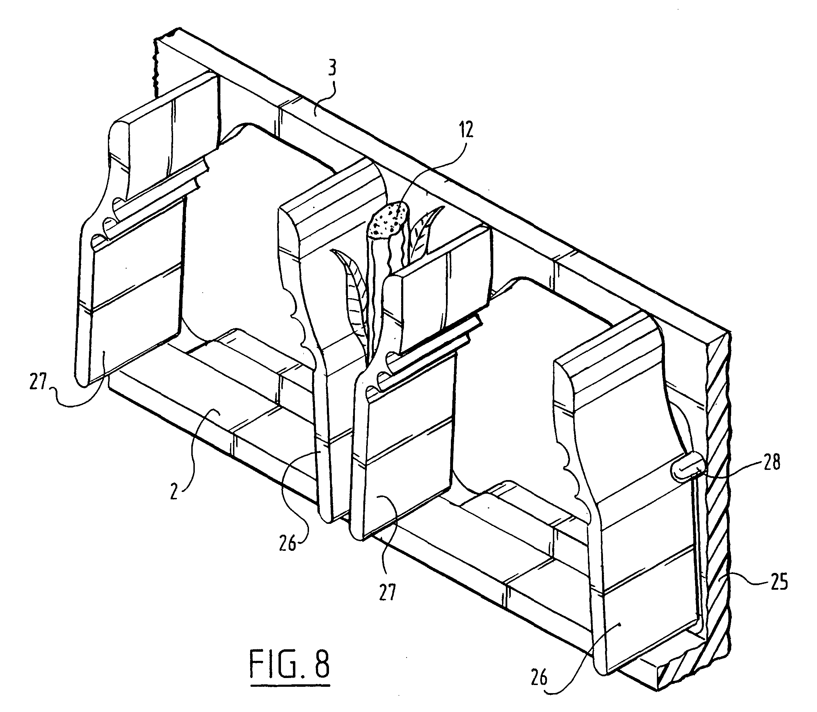

The embodiment shown in figure 8 once again has a holder formed by a lower strip 2 and an upper strip 3 which are connected by in this case only a single bridge element 25. It will be apparent that as in the above discussed embodiments the bridge elements 25 are arranged at mutually equal distances and that other measures known from the above embodiments are also applicable in this embodiment.

Two clamping strips 26,27 are fixed to each of the bridge elements 25 by means of connecting pieces 28. Each of the connecting pieces 28 thus extends between a bridge element 25 and a clamping strip 26 respectively 27.

The dimensioning of clamping strips 26,27 and connecting pieces 28 is such that when a cutting 12 is situated between clamping strips 26,27 these are urged towards each other below the level of connecting pieces 28. The undersides of clamping strips 26,27 press against the cutting 12. However, in order to enable insertion of cuttings 12, the parts of clamping strips 26,27 above the connecting pieces are initially moved towards each other so that the parts lying under connecting pieces 28 are moved apart and it is possible to insert cuttings 12.

This configuration enables clamping of cuttings of widely varying diameter, this being highly important.

The thus formed strip can herein also be rolled up of folded zigzag-wise for placing in a conditioned space or for transport.

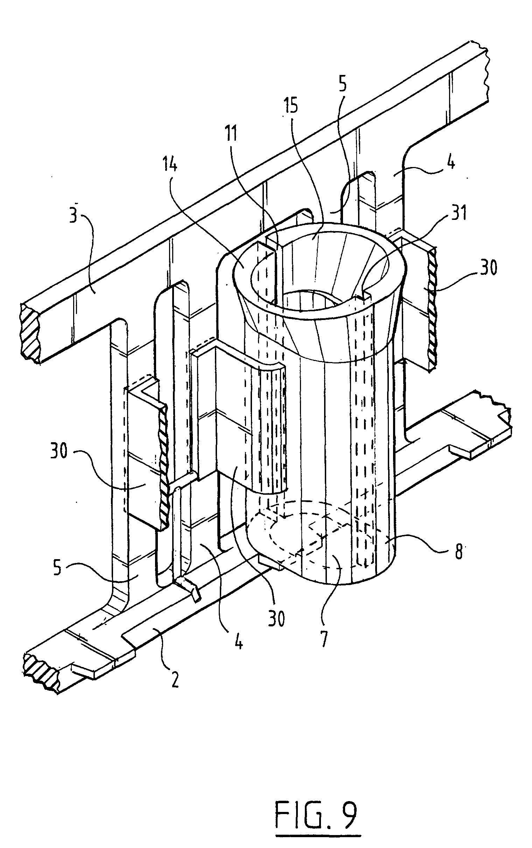

Finally, figure 9 shows an embodiment deviating by use of material. Otherwise this embodiment matches strongly with the embodiment shown in figure 6.

The embodiment of figure 9 deviates in that the parts 7,8 of the clamping material have been made from a material different from the material of the holder.

The strips 2,3 of the holder and the bridge elements 4,5 connecting these strips have been made from a rigid material, for instance a rigid plastic, whereas the clamping elements and the bridges connecting the clamping elements with the bridge elements have been made of softer material, for instance a softer plastic.

The advantage of this configuration is the fact that the structural parts are rigid and can thus be handled in greater units without the danger of breakage of damage of the holder per se. These attractive properties can be combined with the advantages of the soft material for the carriers per se, that is the reduction of the chance of damage of the growing material.

Of course the price of this construction is higher; two materials have to be combined. Therefore, initially the carrier is manufactured, which carrier has been made of rigid material and subsequently, the carrier is located in the mould, in which the clamping elements are made by injection moulding. Such an injection mould is fit for consecutively producing a number of clamping elements, for instance ten clamping elements.

In the present embodiment the clamping elements each comprise a injection mould connection.

However, it is also possible to provide each of the clamping elements separately with an injection mould connection.

Another difference resides in the fact that the double bridges 9 with the preceding embodiments have been replaced by simple bridges 30 extending over a certain length. This adaptation relates to the softer material properties.

Further, both parts 7,8 of the clamping elements are mutually connected through a thin bridge of material 31. Because of this the clamping elements obtain sufficient rigidity without the softer material. As an alternative it is possible to locate the strip of material at the rear side. Further, the bridges 30 have been amended into bridge elements 4,5. This relates to the method of production.

## Claims

1. Holder (1) for plant cuttings (12), comprising at least one carrier (2, 3) and a series of clamping elements (13) which are fixed to the carrier (2, 3) and which are each adapted to clamp a plant cutting (12), wherein the clamping elements (13) are fixed to the carrier (2, 3) such that plant cuttings (12) clamped in the clamping elements (13) extend substantially parallel to each other, and the centre of each of the clamping elements is situated substantially in the same central plane.

2. Holder as claimed in claim 1, **characterized in that** the central plane extends at a right angle to the plant cuttings.

3. Holder as claimed in claim 1 or 2, **characterized in that** the carrier extends as a strip and that the clamping elements are fixed to the carrier at regular mutual distances.

4. Holder as claimed in claim 1, 2 or 3, **characterized in that** the clamping elements are each fixed on the same side of the carrier.

5. Holder as claimed in any of the foregoing claims, **characterized in that** the mutual distance between the clamping elements on one side of the carrier is greater than or equal to the mutual distance between the centre of the clamping elements so that two carriers with their clamping elements can be placed between each other.

6. Holder as claimed in any of the foregoing claims, **characterized in that** the carrier is substantially flexible.

7. Holder as claimed in any of the claims 1-5, **characterized in that** the carrier is divided into substantially rigid pieces which are coupled in mutually flexible manner.

8. Holder as claimed in any of the claims 1-5, **characterized in that** the carrier has been made substantially from rigid material.

9. Holder as claimed in claim 8, **characterized in that** the clamping elements have been made from softer material than the carrier.

10. Holder as claimed in claim 9, **characterized in that** the clamping elements have been made in the carrier by injection moulding and that they are connected with the carrier.

11. Holder as claimed in any of the foregoing claims, **characterized in that** the clamping elements each comprise at least two parts (7, 8), at least one of which is connected resiliently to the carrier.

12. Holder as claimed in claim 11, **characterized in that** the parts'each take substantially the form of a semi-cylindrical surface, wherein both parts are connected to the carrier such that in the non-loaded situation both parts are separated on either side by a narrow gap.

13. Holder as claimed in claim 11 or 12, **characterized in that** the inner walls of both parts of the clamping elements have an upward diverging form on one side.

14. Holder as claimed in claim 11, 12 or 13, **characterized in that** the inner wall of both parts of the clamping elements together have a substantially oval section.

15. Holder as claimed in claim 12, 13 or 14, **characterized in that** each of the parts is connected to the carrier by at least two bridges (9).

16. Holder as claimed in claim 15, **characterized in that** each of the parts is connected to the carrier by a single bridge element (25), and that each bridge element extends over a substantial part of the length of the parts of the clamping element.

17. Holder as claimed in claim 16, **characterized in that** both parts of the clamping element are mutually connected by a thin strip of material.

18. Holder as claimed in claim 15, **characterized in that** the carrier comprises elements (4) which extend parallel to the axis of the clamping elements and which are connected by means of a narrowed portion (6) to parts of the carrier (2, 3) extending substantially in lengthwise direction of the carrier.

19. Holder as claimed in claim 18, **characterized in that** the carrier comprises two rods extending in lengthwise direction to which the elements are fixed.

20. Holder as claimed in claim 19, **characterized in that** the clamping elements extend partially between the rods.

21. Holder as claimed in claim 11, **characterized in that** each of the parts of the clamping elements are connected to the carrier for tilting on an axis extending substantially at a right angle to the plane of the carrier.

22. Holder as claimed in claim 21, **characterized in that** each of the parts of the clamping elements are connected to the carrier by means of a connection subject to torsion.

23. Holder as claimed in claim 22, **characterized in that** the parts of the clamping elements each comprise a plate which comprises a clamping surface on one side of the connection to the carrier and are provided on the other side with engaging surfaces for moving apart the clamping surfaces in the manner of a lever.

24. Holder as claimed in any of the claims 9-23, **characterized in that** the holder is manufactured by injection moulding or thermoforming of plastic.

25. Holder as claimed in any of the claims 1-6, **characterized in that** the carrier is manufactured from flat material in which at least three lips are punched at the position of each clamping element, which lips are adapted to fixedly clamp the plant cuttings.

26. Holder as claimed in claim 25, **characterized in that** the holder is manufactured from paper or from plastic foil.

## Patentansprüche

1. Halter (1) für Pflanzenstecklinge (12), mit wenigstens einem Träger (2, 3) und einer Reihe von Klemmelementen (13), die an dem Träger (2, 3) befestigt sind und die jeweils ausgelegt sind, um einen Pflanzensteckling (12) festzuklemmen, wobei die Klemmelemente (13) derart an dem Träger (2, 3) befestigt sind, daß in den Klemmelementen (13) eingeklemmte Pflanzenstecklinge (12) sich parallel zueinander erstrecken und das Zentrum jedes Klemmelements im wesentlichen in der gleichen zentralen Ebene liegt.

2. Halter nach Anspruch 1, **dadurch gekennzeichnet, daß** sich die zentrale Ebene unter einem rechten Winkel zu den Pflanzenstecklingen erstreckt.

3. Halter nach Anspruch 1 oder 2, **dadurch gekennzeichnet, daß** der Träger sich als Streifen erstreckt und daß die Klemmelemente in regelmäßigen, gegenseitigen Abständen an dem Träger befestigt sind.

4. Halter nach Anspruch 1, 2 oder 3, **dadurch gekennzeichnet, daß** die Klemmelemente jeweils an der gleichen Seite des Trägers befestigt sind.

5. Halter nach einem der vorstehenden Ansprüche, **dadurch gekennzeichnet, daß** der gegenseitige Abstand zwischen den Klemmelementen an einer Seite des Trägers größer oder gleich dem gegenseitigen Abstand zwischen dem Zentrum der Klemmelemente ist, so daß zwei Träger mit ihren Klemmelementen zwischeneinander anordenbar sind.

6. Halter nach einem der vorstehenden Ansprüche, **dadurch gekennzeichnet, daß** der Träger im wesentlichen flexibel ist.

7. Halter nach einem der Ansprüche 1-5, **dadurch gekennzeichnet, daß** der Träger in im wesentlichen steife Teile unterteilt ist, die in gegenseitig flexibler Weise gekoppelt sind.

8. Halter nach einem der Ansprüche 1-5, **dadurch gekennzeichnet, daß** der Träger aus im wesentlichen steifem Material hergestellt ist.

9. Halter nach Anspruch 8, **dadurch gekennzeichnet, daß** die Klemmelemente aus weicherem Material als der Träger hergestellt sind.

10. Halter nach Anspruch 9, **dadurch gekennzeichnet, daß** die Klemmelemente in dem Träger hergestellt sind durch Spritzgießen und daß sie mit dem Träger verbunden sind.

11. Halter nach einem der vorstehenden Ansprüche, **dadurch gekennzeichnet, daß** die Klemmelemente jeweils wenigstens zwei Teile (7, 8) umfassen, von denen wenigstens eines elastisch mit dem Träger verbunden ist.

12. Halter nach Anspruch 11, **dadurch gekennzeichnet, daß** die Teile jeweils im wesentlichen die Form einer halbzylindrischen Oberfläche einnehmen, wobei beide Teile derart mit dem Träger verbunden sind, daß beide Teile im nicht belasteten Zustand durch einen schmalen Spalt an beiden Seiten getrennt sind.

13. Halter nach Anspruch 11 oder 12, **dadurch gekennzeichnet, daß** die Innenwände beider Teile der Klemmelemente an einer Seite aufwärts divergierende Form haben.

14. Halter nach Anspruch 11, 12 oder 13, **dadurch gekennzeichnet, daß** die Innenwand beider Teile der Klemmelemente zusammen einen im wesentlichen ovalen Schnitt haben.

15. Halter nach Anspruch 12, 13 oder 14, **dadurch gekennzeichnet, daß** jedes der Teile über wenigstens zwei Brücken (9) mit dem Träger verbunden ist.

16. Halter nach Anspruch 15, **dadurch gekennzeichnet, daß** jedes der Teile über ein einzelnes Überbrückungselement (25) mit dem Träger verbunden ist und daß jedes Überbrückungselement sich über einen wesentlichen Teil der Länge der Teile des Klemmelements erstreckt.

17. Halter nach Anspruch 16, **dadurch gekennzeichnet, daß** beide Teile des Klemmelements über einen dünnen Materialstreifen miteinander verbunden sind.

18. Halter nach Anspruch 15, **dadurch gekennzeichnet, daß** der Träger Elemente (4) umfaßt, die sich parallel zur Achse der Klemmelemente erstrecken und die mit Hilfe eines verjüngten Abschnitts (6) mit Teilen des Trägers (2, 3) verbunden sind, die sich im wesentlichen in Längsrichtung des Trägers erstrecken.

19. Halter nach Anspruch 18, **dadurch gekennzeichnet, daß** der Träger zwei Ansätze umfaßt, die sich in Längsrichtung erstrecken, woran die Elemente befestigt sind.

20. Halter nach Anspruch 19, **dadurch gekennzeichnet, daß** sich die Klemmelemente teilweise zwischen den Ansätzen erstrecken.

21. Halter nach Anspruch 11, **dadurch gekennzeichnet, daß** jedes der Teile der Klemmelemente mit dem Träger verbunden ist, um sich anzulegen bzw. neigen an eine Achse, die sich im wesentlichen unter einem rechten Winkel zu der Ebene des Trägers erstreckt.

22. Halter nach Anspruch 21, **dadurch gekennzeichnet, daß** jedes der Teile der Klemmelemente mit einer einer Torsion unterworfenen Verbindung mit dem Träger verbunden ist.

23. Halter nach Anspruch 22, **dadurch gekennzeichnet, daß** die Teile der Klemmelemente jeweils eine Platte umfassen, die eine Klemmoberfläche an einer Seite der Verbindung zu dem Träger umfaßt und sie an der anderen mit Eingriffsoberflächen versehen sind, um die Klemmoberflächen nach Art eines Hebels voneinander weg zu bewegen.

24. Halter nach einem der Ansprüche 9-23, **dadurch gekennzeichnet, daß** der Halter durch Spritzgießen oder Thermoformen von Kunststoff hergestellt ist.

25. Halter nach einem der Ansprüche 1-6, **dadurch gekennzeichnet, daß** der Träger aus einem flachen Material hergestellt ist, in das wenigstens drei Lippen an den Orten jedes Klemmelements gestanzt sind, wobei die Lippen derart ausgestaltet sind, daß sie die Pflanzenstecklinge fest klemmen.

26. Halter nach Anspruch 25, **dadurch gekennzeichnet, daß** der Halter aus Papier oder aus Kunststofffolie hergestellt ist.

## Revendications

1. Tuteur (1) pour boutures (12), comprenant au moins un support (2, 3) et une série d'éléments de serrage (13) qui sont fixés au support (2, 3) et qui sont chacun adaptés pour serrer une bouture (12), les éléments de serrage (13) étant fixés au support (2, 3) de sorte que les boutures (12), serrées dans les éléments de serrage (13), s'étendent sensiblement parallèlement les unes aux autres, et le centre de chacun des éléments de serrage étant situé sensiblement dans le même plan central.

2. Tuteur selon la revendication 1, **caractérisé en ce que** le plan central s'étend à angle droit par rapport aux boutures.

3. Tuteur selon la revendication 1 ou 2, **caractérisé en ce que** le support s'étend sous la forme d'une bande et **en ce que** les éléments de serrage sont fixés au support à des intervalles réguliers.

4. Tuteur selon la revendication 1, 2 ou 3, **caractérisé en ce que** les éléments de serrage sont chacun fixés du même côté du support.

5. Tuteur selon l'une quelconque des revendications précédentes, **caractérisé en ce que** l'intervalle entre les éléments de serrage d'un côté du support est supérieur ou égal à l'intervalle entre les centres des éléments de serrage de façon à pouvoir placer entre eux deux supports dotés de leurs éléments de serrage.

6. Tuteur selon l'une quelconque des revendications précédentes, **caractérisé en ce que** le support est sensiblement flexible.

7. Tuteur selon l'une quelconque des revendications 1 à 5, **caractérisé en ce que** le support est divisé en pièces sensiblement rigides qui sont couplées de manière à être mutuellement flexible.

8. Tuteur selon l'une quelconque des revendications 1 à 5, **caractérisé en ce que** le support est fabriqué essentiellement à partir d'un matériau rigide.

9. Tuteur selon la revendication 8, **caractérisé en ce que** les éléments de serrage sont fabriqués à partir d'un matériau plus souple que le support.

10. Tuteur selon la revendication 9, **caractérisé en ce que** les éléments de serrage aient été incorporés dans le support par moulage par injection et **en ce qu'**ils sont reliés au support.

11. Tuteur selon l'une quelconque des revendications précédentes, **caractérisé en ce que** les éléments de serrage se composent chacun d'au moins deux parties (7, 8), dont au moins une est reliée de façon élastique au support.

12. Tuteur selon la revendication 11, **caractérisé en ce que** les parties prennent toutes sensiblement la forme d'une surface semi-cylindrique, les deux parties étant reliées au support de telle sorte que, à l'état non chargé, les deux parties sont séparées des deux côtés par un espace étroit.

13. Tuteur selon la revendication 11 ou 12, **caractérisé en ce que** les parois intérieures des deux parties des éléments de serrage ont une forme divergeant vers le haut sur un côté.

14. Tuteur selon la revendication 11, 12 ou 13, **caractérisé en ce que** les parois intérieures des deux parties des éléments de serrage forment ensemble une section sensiblement ovale.

15. Tuteur selon la revendication 12, 13 ou 14, **caractérisé en ce que** chacune des parties est reliée au support par au moins deux ponts (9).

16. Tuteur selon la revendication 15, **caractérisé en ce que** chacune des parties est reliée au support par un unique élément de pont (25), et **en ce que** chaque élément de pont s'étend sur une importante partie de la longueur des parties de l'élément de serrage.

17. Tuteur selon la revendication 16, **caractérisé en ce que** les deux parties de l'élément de serrage sont reliées entre elles par une mince bande de matière.

18. Tuteur selon la revendication 15, **caractérisé en ce que** le support comprend des éléments (4) qui s'étendent parallèlement à l'axe des éléments de serrage et qui sont reliés au moyen d'une portion rétrécie (6) à des parties du support (2, 3) s'étendant sensiblement dans la direction longitudinale du support.

19. Tuteur selon la revendication 18, **caractérisée en ce que** le support comprend deux barres, s'étendant dans la direction longitudinale, auxquelles sont fixés les éléments.

20. Tuteur selon la revendication 19, **caractérisé en ce que** les éléments de serrage s'étendent partiellement entre les barres.

21. Tuteur selon la revendication 11, **caractérisé en ce que** chacune des parties des éléments de serrage est reliée au support en vue de s'incliner suivant un axe étendant sensiblement à angle droit par rapport au plan du support.

22. Tuteur selon la revendication 21, **caractérisée en ce que** chacune des parties des éléments de serrage est reliée au support au moyen d'une connexion soumise à une torsion.

23. Tuteur selon la revendication 22, **caractérisé en ce que** les parties des éléments de serrage comprennent chacune une plaque qui présente une surface de serrage sur un côté de la connexion au support et sont dotées de l'autre côté de surfaces d'engagement pour écarter les surfaces de serrage à la manière d'un levier.

24. Tuteur selon l'une quelconque des revendications 9 à 23, **caractérisé en ce que** le tuteur est fabriqué par moulage par injection ou par thermoformage de matières plastiques.

25. Tuteur selon l'une quelconque des revendications 1 à 6, **caractérisé en ce que** le support est fabriqué à partir d'un matériau plat dans lequel au moins trois lèvres sont embouties à la position de chaque élément de serrage, lesquelles lèvres sont adaptées pour immobiliser les boutures par serrage.

26. Tuteur selon la revendication 25, **caractérisé en ce que** le tuteur est fabriqué en papier ou à partir d'une feuille de matière plastique.
